Europäisches Patentamt

European Patent Office

Office européen des brevets

(19)

(11) **EP 1 578 052 A2**

(12) **DEMANDE DE BREVET EUROPEEN**

(43) Date de publication:
**21.09.2005 Bulletin 2005/38**

(51) Int Cl.⁷: **H04L 9/12**, H04Q 7/38,
H04L 9/08, H04L 9/32

(21) Numéro de dépôt: **04300739.2**

(22) Date de dépôt: **27.10.2004**

(84) Etats contractants désignés:
**AT BE BG CH CY CZ DE DK EE ES FI FR GB GR
HU IE IT LI LU MC NL PL PT RO SE SI SK TR**
Etats d'extension désignés:
**AL HR LT LV MK**

(30) Priorité: **06.11.2003 FR 0350801**

(71) Demandeur: **Societé Française du
Radiotéléphone
92915 Paris la Défense Cedex (FR)**

(72) Inventeurs:
• **WARY, Jean-Philippe
92340, BOURG LA REINE (FR)**
• **WANNER, Paul
57000, METZ (FR)**

(74) Mandataire: **Schmit, Christian Norbert Marie et al
SCHMIT-CHRETIEN-SCHIHIN
8, place du Ponceau
95000 Cergy (FR)**

(54) **Procédé sécurisé d'établissement d'une communcation ou d'une transaction entre un terminal et un réseau**

(57) Pour éviter les piratages de communications mobiles dus à l'affaiblissement de l'algorithme A5/2, on dote l'infrastructure GSM de moyens pour mesurer un temps de réponse d'un téléphone à une demande (121) d'utilisation de l'algorithme A5/1. Si ce temps est supérieur (115) à un délai prédéterminé, alors on estime qu'il y a piratage et on interrompt la communication.

**Fig. 1**

EP 1 578 052 A2

Printed by Jouve, 75001 PARIS (FR)

## Description

L'invention a pour objet un procédé sécurisé d'établissement d'une communication ou d'une transaction entre un terminal et un élément d'une infrastructure réseau.

Le domaine de l'invention est celui des télécommunications et notamment celui de la téléphonie mobile. Encore plus particulièrement le domaine de l'invention est celui de l'identification et de la connexion d'un terminal sur un réseau de télécommunications.

Dans l'état de la technique, les méthodes de détection d'actions délictueuses au niveau des protocoles de communication ou de transaction sont basées sur la scrutation des messages reçus et le rejet de ceux-ci lorsque les paramètres les composant ne correspondent pas aux automates d'états gérés par les protocoles. Cet état de l'art est par exemple mis en oeuvre au niveau des «Firewalls» IP pour le monde Internet, ainsi qu'au niveau des DAB/GAB (Distributeurs Automatiques de Billets / Guichets Automatiques de Billets) lorsque les requêtes échangées entres ceux-ci et les serveurs bancaires ne correspondent pas aux automates d'états.

De nouvelles technologies d'attaques des protocoles de communication comme celle mise en oeuvre par l'Institut Technion de Haïfa (--Instant Cyphertext only Cryptanalysis of GSM encrypted Communication-- Déchiffrement instantané des communications GSM Chiffrées-- Barkan-Biham-Keller, Août 2003) sont non détectables par l'état de l'art actuel. Le but de la présente invention est d'acquérir une connaissance des comportements normaux et de rejeter au vu de la connaissance acquise les demandes de connexion ou de transaction anormales. Cette approche heuristique, mise en oeuvre au niveau des systèmes de détection ou de reconnaissance de formes n'a jamais été mise en oeuvre pour sécuriser des protocoles de communication.

Cette acquisition de connaissance est réalisée au moyen d'un prélèvement de mesures physiques spécifiques à des étapes identifiées du protocole. Ces mesures peuvent, par exemple, concerner et exploiter des notions de puissance reçue ou émise, des notions de fréquence ou des notions de délais. Chacune de ces acquisitions est ensuite traitée pour renseigner des statistiques de comportement exploitées dans le but d'accepter ou de rejeter, respectivement, un message selon que ce dernier présente un comportement conforme ou non conforme, respectivement, à la statistique renseignée.

L'acceptation ou le rejet du message est donc ensuite fonction de la mise en oeuvre d'une statistique de rejet par rapport à la connaissance acquise.

En particulier dans le protocole GSM, on utilise des algorithmes de chiffrement dont le niveau de sécurité s'affaiblit avec le temps. Cet affaiblissement est dû à l'augmentation des puissances de calcul disponibles et des études approfondies faites et publiées sur ces algorithmes. En particulier le temps a révélé des failles dans un des algorithmes de chiffrement symétrique nommé A5/2. Cet algorithme est notamment utilisé dans le protocole GSM pour chiffrer les échanges au niveau de la voie air (entre le mobile de l'utilisateur et la balise radio, BTS, du réseau mobile).

Dans les faits, l'algorithme A5/2 est cassé (voir en particulier la publication de l'Institut Technion de Haïfa citée plus haut) ce qui pourrait permettre à des personnes indiscrètes de pénétrer un réseau GSM en usurpant une identité lors de la connexion d'un terminal à ce réseau GSM.

Une solution simple à ce problème serait de supprimer la possibilité de mise en oeuvre de l'algorithme A5/2 par les terminaux mobiles. Cependant, pour le GSM, on estime qu'à cette date, il y a plus de 800 millions de terminaux en circulation, et il n'est évidemment pas envisageable de rappeler, pour modification, l'intégralité ou même un nombre suffisamment significatif d'entre eux.

Dans l'invention on résout ces problèmes en analysant, notamment dans le réseau GSM, les échanges de trames ayant lieu entre un terminal cherchant à se connecter au réseau et le réseau. En particulier on étudie et on scrute le temps de réponse du terminal à une requête du réseau, cette requête pouvant être la demande d'authentification du réseau ou la requête lui indiquant quel algorithme de chiffrement doit être utilisé pour la suite de la communication entre ledit terminal et ledit réseau. Si ce temps de réponse sort d'un gabarit, c'est-à-dire si ce temps de réponse est supérieur à un délai Δ (plus généralement ne correspond pas à une statistique Δ) prédéterminé par l'étude des communications, alors on considère qu'un piratage est en cours et le réseau interrompt la communication avec le terminal susceptible d'être piraté. Par convention, le terme «délai Δ» correspond à l'ensemble des délais $\Delta i$ pouvant être identifiés dans ce document. Le terme «délai Δ» peut aussi être appliqué dans le cas où il correspond à un ensemble de mesures effectuées sur P réponses à P messages émis, le délai Δ est alors de dimension P (en termes mathématiques, c'est un vecteur de dimension P). La notion «délai Δ inférieur ou égal à une seconde» signifie alors dans le cas multidimensionnel que l'ensemble des délais $\Delta i$ est, pour chacun de ces délais, inférieur à une seconde. De la même façon la notion «délai Δ inférieur ou égal C secondes», C étant une constante réelle prédéterminée, signifie alors dans le cas multidimensionnel que l'ensemble des délais $\Delta i$ est, pour chacun de ces délais, inférieur à Ci secondes, Ci étant une constante réelle prédéterminée.

L'invention a donc pour objet un procédé sécurisé d'établissement d'une communication ou d'une transaction entre un terminal et un élément de l'infrastructure d'un réseau auquel le terminal envoie une requête de connexion ou de transaction, dans lequel :

- le terminal émet vers l'élément de l'infrastructure réseau des messages selon le protocole de connexion ou de transaction,

- l'élément de l'infrastructure réseau répond à ces messages selon le protocole de connexion ou de transaction,caractérisé en ce que :

  - l'élément de l'infrastructure réseau acquiert au cours de ces échanges P mesures physiques sur les messages issus du terminal,
  - l'élément de l'infrastructure réseau effectue un test de rejet statistique sur ces P mesures physiques par rapport à une connaissance statistique préalablement acquise et,
  - dans le cas où le test de rejet conclut que le terminal présente un comportement mesuré non conforme à la connaissance déjà acquise et donc anormal, l'élément de l'infrastructure réseau rejette la demande de connexion ou de transaction,
  - tandis que dans le cas où le test identifie que le terminal a un comportement mesuré conforme à la connaissance déjà acquise, l'élément de l'infrastructure réseau enrichit sa connaissance par la prise en compte de ces nouvelles mesures.

Avantageusement la connaissance statistique est basée sur une combinaison des paramètres acquis selon des opérateurs mathématiques appartenant au groupe formé de au moins l'addition, la soustraction, la multiplication et la division.

Avantageusement l'invention est aussi caractérisée en ce que le test de rejet se base et est effectué en fonction d'une des caractéristiques statistiques des fonctions de distribution ou de répartition de l'échantillon de mesures acquis.

Avantageusement l'invention est aussi caractérisée en ce que le test de rejet est basée sur des tests de normalité.

Dans une application propre à la téléphonie mobile pour lutter contre des attaques de type A5/2 définies ci-avant, la mesure physique pourrait avantageusement être un délai de réponse. Lors d'une demande d'une requête de connexion par un téléphone mobile :

- le téléphone émet vers l'infrastructure un premier message de demande de connexion comportant un identifiant de l'utilisateur du téléphone mobile,
- l'infrastructure répond au premier message par un deuxième message challenge comportant un aléa,
- le téléphone répond au deuxième message par un troisième message comportant l'aléa chiffré avec une clé secrète Ki et selon un algorithme connu de l'infrastructure et du téléphone mobile,
- l'infrastructure répond au troisième message, si son contenu correspond bien à une utilisation de la clé Ki attendue par l'infrastructure, par un quatrième message comportant une désignation d'un algorithme de chiffrement à utiliser pour la suite de la communication entre le téléphone mobile et l'infrastructure, une clé Kc à utiliser avec l'algorithme de chiffrement étant une fonction de l'aléa et de Ki,

- le téléphone répond au quatrième message, ou à un message ultérieur de l'infrastructure, en utilisant la clé Kc et l'algorithme de chiffrement désigné,

caractérisé en ce que :

- on acquiert, dans un premier temps, la connaissance d'une statistique comportementale d'au moins un délai de réponse $\Delta$ d'un grand nombre de téléphones mobiles aux P messages de l'infrastructure, l'infrastructure connaissant cette statistique de délai $\Delta$ mesure et scrute le temps de réponse du téléphone mobile qui envoie ladite requête de connexion et applique un test de rejet sur les temps de réponses relativement à la connaissance de la statistique $\Delta$ qui interrompt alors la communication avec le téléphone mobile si la réponse aux P messages provenant de l'infrastructure ne correspond pas à la statistique $\Delta$ de rejet.

Avantageusement la statistique $\Delta$ peut être basée sur une combinaison des paramètres acquis.

Avantageusement l'invention est aussi caractérisée en ce que les délais $\Delta$ valent une seconde. Avantageusement l'invention est aussi caractérisée en ce que le test de rejet est basée sur des tests de normalité (loi normale, loi gaussienne) par rapport aux estimateurs de la moyenne et de l'écart type.

Avantageusement l'invention est aussi caractérisée en ce que la moyenne et l'écart type sont calculés sur l'échantillon des N derniers délais de réponse au pième message, N étant compris entre 10 et 10000.

Avantageusement l'invention est aussi caractérisée en ce que l'ordre de grandeur de N est la centaine.

Avantageusement l'invention est aussi caractérisée en ce que l'ordre de grandeur de N est le millier.

Avantageusement l'invention est aussi caractérisée en ce que l'ordre de grandeur de N est la dizaine de milliers.

Avantageusement l'invention est aussi caractérisée en ce qu'un délai $\Delta$ n'est jamais supérieur à 1 seconde.

Avantageusement l'invention est aussi caractérisée en ce que la moyenne et l'écart type sont calculés à une fréquence prédéterminée.

Ce test de rejet de la communication, c'est-à-dire de la détection d'un comportement anormal entraînant une suspicion d'action délictueuse, peut être basé sur un test du 'chi-deux', une valeur de quantile, un test de Fisher, un test de Student, un test paramétrique, la liste n'étant pas bien entendu pas exhaustive.

Avantageusement l'invention est aussi caractérisée en ce que l'élément de l'infrastructure mesurant le délai Δ est la station de base à laquelle est connecté le téléphone mobile.

Avantageusement l'invention est aussi caractérisêe en ce que l'élément de l'infrastructure mesurant le délai Δ est un élément de réseau intervenant dans l'établissement d'un accès ou d'une communication sur le réseau mobile.

Avantageusement, l'invention est aussi caractérisée en ce que l'ensemble des messages échangés entre le mobile et le réseau, quelle que soit la couche de protocole ou le protocole utilisé, peut faire l'objet d'une mesure de délai de temps de réponse et de la mise en place d'une statistique de rejet de la communication.

L'invention sera mieux comprise à la lecture de la description qui suit et à l'examen des figures qui l'accompagnent. Celles-ci sont présentées à titre indicatif et nullement limitatif de l'invention. Les figures montrent :

- Figure 1: une illustration d'étapes du procédé selon l'invention et des appareils qui les mettent en oeuvre,

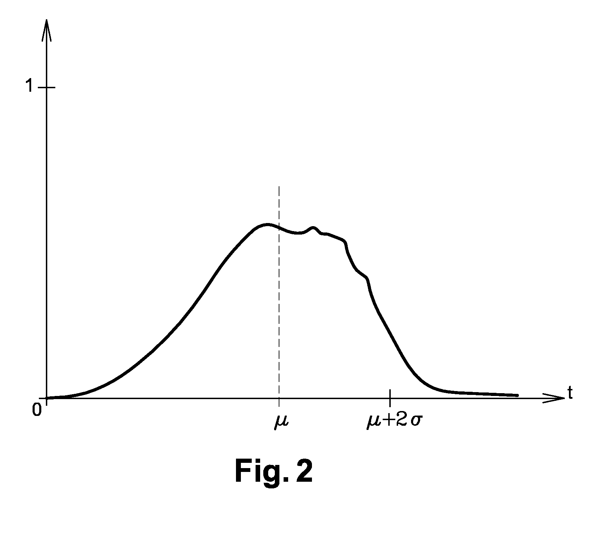

- Figure 2: une illustration d'un mode de détermination du délai toléré de réponse à un message spécifiant un algorithme de chiffrement à utiliser., cet exemple montré, qui se base sur une distribution des temps de réponse de type gaussien, n'étant bien entendu nullement limitatif de l'invention.

La description, pour des raisons de simplification de clarté et de concision, est relative à la mise en place d'une mesure du délai Δ sur l'émission du quatrième message et la réception de sa réponse, cependant, le même principe est applicable, par exemple, à la mesure du délai Δ entre l'émission du deuxième message et la réponse associée ou sur tout autre message et sa réponse associée.

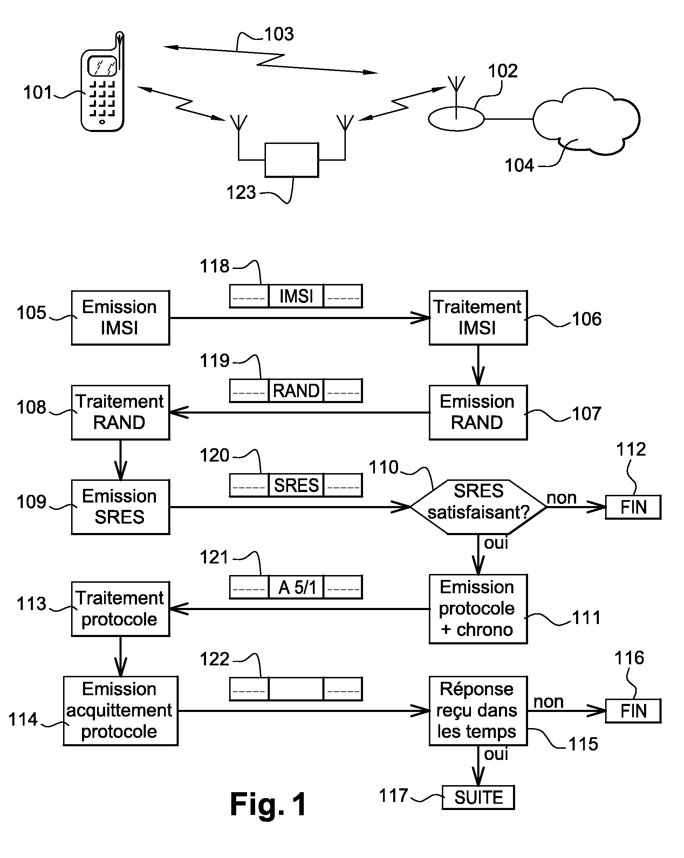

La figure 1 montre un téléphone 101 mobile connecté à une station 102 de base de l'infrastructure d'un réseau 104 GSM par une liaison 103 hertzienne. Dans la pratique la station de base 102 est connectée par un réseau filaire, ou autres moyens de connexion, au reste de l'infrastructure du réseau GSM. Cette infrastructure comporte au moins le BSC (Base Station Controller, pour contrôleur de station de base) et le MSC (Mobile services Switching Centre, pour centre de commutation pour services mobiles) dont dépend la station 102 de base. Dans une forme de réalisation préférée les étapes de l'invention mises en oeuvre par l'infrastructure le sont en fait par un des éléments précédemment cités de l'infrastructure GSM. Dans la pratique n'importe quel élément de l'infrastructure du réseau auquel se connecte le téléphone 101 peut mettre en oeuvre ces étapes.

Dans cette description on prête des actions à des appareils tels qu'un téléphone mobile, une station de base, un BSC, ou autre. Dans la pratique, pour un appareil donné, ces actions sont effectuées par un microprocesseur de cet appareil. Ledit microprocesseur est commandé par des codes instruction enregistrés dans une mémoire dudit appareil et les communications ont lieu à travers des interfaces de connexion dudit appareil.

Dans notre exemple on considère une mise en oeuvre dans une architecture GSM. Dans la pratique l'enseignement de l'invention peut être adapté à toute architecture de réseau de télécommunications dont les protocoles de connexion au réseau présenteraient les mêmes faiblesses que le réseau GSM.

Dans la description qui suit, on confond la station de base 102 avec l'infrastructure du réseau GSM auquel cherche à se connecter le téléphone 101.

La figure 1 montre une étape 105 mise en oeuvre par le terminal 101 lors d'une tentative de connexion de ce terminal au réseau 104. Dans l'étape 105, le terminal 101 émet un message de demande de connexion. Il s'agit d'un premier message 118. Ce message de connexion est émis à destination de l'infrastructure 102. Ce message de demande de connexion comporte au moins un identifiant du terminal et/ou de la personne qui utilise le terminal 101. Dans la pratique cet identifiant est le numéro IMSI (International Mobile Subscriber Identity, pour numéro de souscription mobile international) ou le TMSI (Temporary Mobile Subscriber Identity).

De l'étape 105 on passe à une étape 106 de traitement dans laquelle l'infrastructure 102 traite le premier message. Au cours de ce traitement l'infrastructure 102 utilise le numéro IMSI (ou le TMSI) pour retrouver, dans l'infrastructure, des informations associées à ce numéro IMSI. Parmi ces informations il existe une clé Ki stockée au sein de l'AUC (Authentication Center, pour centre d'authentification). La clé Ki est un mot binaire propre à l'identifiant IMSI et donc à l'utilisateur utilisant le téléphone 101 pour se connecter au réseau 104. Cette clé Ki est aussi enregistrée dans la carte SIM de l'utilisateur, au même titre que le numéro IMSI. Le téléphone 101 a donc accès aussi bien à la valeur IMSI, qu'à une requête d'authentification utilisant la clé Ki confinée dans la carte SIM.

Dans la pratique, le réseau calcule à l'avance des triplets (RAND, SRES, Kc) dans un souci d'optimisation des échanges. Le réseau utilise donc un des triplets disponibles pour procéder à l'étape d'authentification (107, 108, 109 et 110).

Une fois identifié l'abonné via son IMSI, l'infrastructure produit un mot binaire RAND pseudoaléatoire.

De l'étape 106 on passe à une étape 107 d'émission, par l'infrastructure 102 d'un message de réponse au premier message. Cette réponse est un deuxième message 119. Le deuxième message comporte au moins le mot binaire RAND produit à l'étape 106. Ce deuxième message est aussi appelé message de challenge. Il n'y a en effet qu'une seule bonne réponse à ce deuxième message et seul l'utilisateur associé au numéro IMSI possède la carte SIM comportant les informations permettant de produire cette bonne réponse. En d'autres termes, un seul appareil est capable de relever le challenge avec succès en produisant la bonne réponse.

De l'étape 107 on passe à une étape 108 de traitement du deuxième message par le téléphone 101. Dans l'étape 108, le téléphone utilise la fonction d'authentification de la carte SIM en lui soumettant la valeur RAND reçue par le téléphone 101 préalablement à l'étape 108. La carte SIM présente dans le téléphone 101 applique alors l'algorithme de chiffrement A8 sur le mot binaire RAND contenu dans le deuxième message, en utilisant Ki comme clé de chiffrement pour produire un mot binaire SRES. On a donc

$$SRES = A8(RAND, Ki)$$

Dans un souci d'optimisation, la carte SIM procède généralement au calcul de la clé de chiffrement de la voie air : Kc en même temps que le calcul du SRES. Cette clé de chiffrement est obtenue en chiffrant le mot binaire RAND avec la clé Ki selon l'algorithme A3. On a donc :

$$Kc = A3(RAND, Ki)$$

Ces procédures de production du SRES et de la clé Kc font partie du protocole GSM. Il est donc normal qu'elles soient connues de la carte SIM présente dans le terminal 101. Pour la même raison, cette procédure est aussi connue de l'infrastructure 102.

De l'étape 108 on passe à une étape 109 d'émission du mot binaire SRES. Dans l'étape 109, le téléphone 101 est informé par la carte SIM de la valeur SRES produite et envoie celle-ci vers l'infrastructure 102, selon un troisième message 120 qui est une réponse au deuxième message. Le troisième message comporte au moins le mot binaire SRES.

De l'étape 109 on passe à une étape 110 de validation du troisième message par l'infrastructure 102. L'infrastructure 102 connaît en effet à la fois le mot binaire RAND, la clé Ki et la procédure de production du mot binaire SRES. L'infrastructure est donc en mesure elle aussi de produire le mot binaire SRES. L'infrastructure 102 est donc capable de vérifier si le mot binaire SRES reçu via le troisième message correspond bien au chiffrage du mot binaire RAND par la clé Ki en utilisant l'algorithme de chiffrement A8. Dans la mesure où seuls l'infrastructure et le téléphone 101, via sa carte SIM, connaissent la clé Ki, cette procédure permet d'authentifier de manière certaine la carte SIM que comporte le téléphone 101 et donc son utilisateur.

Dans l'étape 110, si le mot binaire SRES reçu via le troisième message est bien le mot attendu par l'infrastructure 102, alors on passe à une étape 111 d'émission de paramètres de la communication. Pour exemple, dans le cadre de la mise en oeuvre d'un test de rejet de la communication sur le délai entre l'émission du deuxième message et la réponse associée, les mesures de délais et le test de rejet pourraient être effectués avant l'étape 111. Si le mot binaire SRES reçu n'est pas conforme, on passe à une étape 112 de fin dans laquelle l'infrastructure 102 interrompt la communication avec le téléphone 101.

Dans l'étape 111, l'infrastructure 102 produit et émet à destination du téléphone 101 un quatrième message 121 de configuration de la communication. Le quatrième message comporte au moins la désignation d'un algorithme de chiffrement. Dans la pratique il s'agit généralement de l'algorithme A5/1 connu pour sa robustesse. L'algorithme A5/1 est un algorithme symétrique.

De l'étape 111, on passe à une étape 113 de traitement du quatrième message. Dans l'étape 113, le téléphone produit un cinquième message de prise en compte de la demande d'activation du chiffrement. Le contenu de ce cinquième message 122 et de tous les messages suivants, est chiffré avec l'algorithme désigné dans le quatrième message. La clé de chiffrement utilisée est la clé Kc.

Le cinquième message, une fois produit, est émis, dans une étape 114, à destination de l'infrastructure 102 qui le reçoit et le traite dans une étape 115.

En parallèle, le téléphone émet des messages comportant diverses mesures qu'il a effectuées sur son environnement électromagnétique et ou ses paramètres de fonctionnement (messages SACCH par exemple). Le contenu de ce sixième message 124 et de tous les messages suivants, est chiffré dès que le cinquième message est émis.

Dans la mesure où l'infrastructure 102 connaît le mot RAND, la clé Ki et la procédure de production de Kc, l'infrastructure est donc en mesure de produire Kc, de déchiffrer les messages émis par le téléphone 101 à partir de l'étape 114 et d'émettre des messages chiffrés en utilisant la clé Kc.

La clé Kc est la clé de la session qui vient d'être ouverte entre le téléphone 101 et l'infrastructure 102. La clé Kc est utilisée durant toute la session pour chiffrer le contenu des messages échangés entre le téléphone 101 et l'infrastructure 102. La session se termine lorsque la connexion, entre le téléphone 101 et l'architecture 102, est interrompue pour une raison quelconque.

On sait que le protocole GSM prévoit que l'algorithme désigné dans le quatrième message puisse aussi être l'algorithme symétrique A5/2.

En théorie, il est donc possible qu'une personne indiscrète ait placé entre le téléphone 101 et l'infrastructure 102 un appareil 123 se faisant passer d'une part pour l'infrastructure 102, d'autre part pour le téléphone 101. En d'autres termes, l'appareil 123 sert alors d'intermédiaire entre le téléphone 101 et l'infrastructure 102. L'appareil 123 est totalement passif jusqu'à l'étape 111, il ne sert que de relais entre le téléphone 101 et l'infrastructure 102, ce qui lui permet de prendre connaissance de l'IMSI, du mot binaire RAND et du mot binaire SRES. L'appareil 123 modifie par contre le message 121 de manière à ce que celui-ci désigne l'algorithme A5/2. Dans ce cas le téléphone 101 recevant le quatrième message ainsi modifié va poursuivre la communication en utilisant l'algorithme A5/2, en particulier sa réponse au quatrième message sera chiffrée en utilisant A5/2. L'appareil 123 utilisera alors les faiblesses du code A5/2 pour déchiffrer les cinquième et ou sixième messages et obtenir ainsi la clé Kc et le contenu du cinquième message. Connaissant Kc, l'appareil 123 est de facto connecté au réseau 104 en ayant usurpé l'identité de l'utilisateur du téléphone 101. A partir de ce moment l'utilisateur de l'appareil 123 peut soit, détourner la communication à sa guise soit, simplement espionner la communication du téléphone 101. C'est donc, l'appareil 123 qui répond au quatrième message et ce, à sa guise.

Dans l'invention et dans cet exemple, dans l'étape 111, l'infrastructure 102 déclenche un chronomètre au moment où elle émet le quatrième message. Dans l'étape 115, l'infrastructure 102 reçoit une réponse au quatrième message. Au moment de la réception de cette réponse l'infrastructure arrête le chronomètre déclenché à l'étape 111. Cela permet de connaître le temps de réponse du téléphone 101 au quatrième message. Si ce temps chronométré est supérieur à un délai Δ prédéterminé, alors l'infrastructure 102 interrompt la communication avec le téléphone 101 et on passe de l'étape 115 à une étape 116 d'interruption de la communication. Sinon on passe de l'étape 115 à une étape 117 qui poursuit la communication avec le téléphone 101.

Il s'agit bien là d'un test de rejet, car si le cinquième message n'arrive pas dans des temps attendus, il est tout simplement rejeté. On parle d'un rejet statistique car le décision de rejeter, ou de ne pas rejeter, est fonction d'une statistique.

Ce mode de procéder est pertinent car bien qu'affaibli, l'attaque sur l'algorithme A5/2 nécessite un certain nombre de messages chiffrés pour retrouver la clé de chiffrement. Dans la description de l'attaque, les messages chiffrés sont les trames SACCH. Deux de ces trames sont nécessaires pour reconstruire la clé Kc, or ces trames de par la construction du système de transmission radio du réseau GSM sont séparées par 480 milliseconde, il y a donc au minimum un délai de 480 milliseconde rajouté au temps de réponse normal et ce sans compter le temps de calcul nécessaire pour extraire la valeur de la clé. Ce certain temps rallonge sensiblement le délai de réponse apparent du téléphone 101 au quatrième message. Un délai de réponse trop long à ce quatrième message correspond alors à un possible piratage et il faut interrompre la communication.

Il est possible de choisir Δ de manière arbitraire, par exemple 1 ou 2 secondes connaissant le délai de réponse habituel moyen.

Il est aussi possible d'adapter Δ à l'environnement de la station 102 de base. Par exemple l'infrastructure 102 est capable, pour une station de base, un BSC ou un MSC, de calculer un délai de réponse moyen au quatrième message. Cette moyenne est effectuée, par exemple, sur les N dernières tentatives de connexion fructueuses d'un téléphone à la station de base 102, ou le BSC dont elle dépend, ou à le MSC dont elle dépend. Dans la pratique N est compris entre 10 et 1000. Si on a la puissance de calcul nécessaire, il est possible de porter N à 10000 ou plus.

En ayant la connaissance de la moyenne μ, il est alors possible de définir une tolérance par rapport à cette moyenne. Par exemple Δ vaut μ plus 1 seconde.

Dans une autre variante on calcule aussi l'écart type σ pour les N dernières tentatives de connexion fructueuses. On choisit alors Δ valant μ plus au moins 2 fois σ (voire 3 fois σ). Cette valeur 2 voire 3σ donne une probabilité de rejet à tort inférieure à 1% dans le cadre d'une loi gaussienne . Dans cette variante on peut aussi décider que Δ ne doit jamais être supérieur à une seconde. Dans ce cas Δ = max (μ + 2. σ, 1).

De manière à ne pas trop surcharger l'infrastructure 102 de calcul il est aussi possible de ne calculer les moyenne et écart type qu'à une certaine fréquence, par exemple toutes les N tentatives de connexions fructueuses.

Dans une autre variante, la variable Δ est multidimensionnelle et correspond à P mesures de délais sur des temps de réponse à P messages distincts émis par l'infrastructure du réseau. La statistique de rejet peut alors être construite à la fois sur la base de la connaissance théorique des fonctions de répartition des délais mesurés et sur des estimateurs statistiques de ceux-ci. Le test statistique est ainsi construit sur une hypothèse de rejet de la probabilité d'occurrence du vecteur mesuré.

Pour effectuer ces calculs, l'infrastructure 102 doit garder en mémoire, pour les N dernières tentatives (N fois P mesures dans le cadre multi dimensionnel) de connexion fructueuses, le temps mis pour obtenir une réponse au quatrième message. Cette mémoire est mise à jour à chaque nouvelle tentative de connexion fructueuse. On parle encore d'acquisition de connaissance, ou d'acquisition d'un échantillon de mesure. L'infrastructure 102 comporte donc une mémoire permettant ces calculs. L'infrastructure 102 comporte aussi une horloge lui permettant de mesurer les délais de réponses aux quatrièmes messages.

Dans une autre variante, le test de rejet est basé sur un test de normalité (par rapport à une loi Gaussienne ou Normale).

Une connexion est fructueuse si le test de l'étape 115 selon l'invention est passé avec succès. S'il y a trop peu de connexions fructueuses l'infrastructure augmente arbitrairement Δ. Cela se produit, par exemple, si au mois 50% des tentatives de connexion, parmi les N dernières tentatives, sont infructueuses.

Dans une variante de l'invention, la base de temps utilisée pour les chronométrages n'est pas exprimée en secondes, mais est calculée à partir de la fréquence du quartz pilotant les microprocesseurs ou est calculée à partir de tout autre motif temporel répétitif de l'élément du réseau GSM en charge du calcul des délais.

Dans une autre variante de l'invention, les délais sont évalués sur plusieurs éléments de réseau distincts (exemple, BTS, BSC et MSC) et les tests de rejet sont calculés à partir de la collecte des différents délais correspondant à une même communication (ou établissement d'une communication).

Dans une variante préférée, l'élément de l'infrastructure effectuant les mesures de délais de réponse est la station de base à laquelle est connecté le téléphone 101. En effet, on a ainsi la meilleure prise en compte de l'environnement électromagnétique, notamment en ce qui concerne la propagation, du téléphone 101.

Il est rappelé ici que la présente invention cidessus décrite est avantageusement transposable à toute pile de protocole (IP, Frame Relay, X25, etc.) et à tout type de transaction (transaction électronique, signature électronique, EDI, etc.).

Dans une variante de l'invention appliquée au cas de la téléphonie GSM, on considère en fait que $\Delta$ est un vecteur de dimensions P=2, la première dimension $\Delta1$ correspondant au délai de réponse au message 119, la deuxième dimension portant sur le délai $\Delta2$ de réponse au message 121. Dans cette variante le test de rejet peut alors être une combinaison linéaire normalisée des délais $\Delta1$ et $\Delta2$ du type $\Delta r = a \cdot (\mu(\Delta1) + 2.\sigma(\Delta1)) + b.(\mu(\Delta2) + 2.\sigma(\Delta2))$, avec $a + b = 1$, et $\sigma$ l'écart type, et $\mu$ la moyenne. Dans ce cas le test de rejet porte sur $\Delta r$. Pour une tentative de connexion donnée, avec un délai d1 de réponse au message 119, et un délai de réponse d2 au message 121, il faut alors que $a.d1 + b.d2$ soit inférieur à $\Delta r$. Cela impose à l'élément effectuant le test de rejet de disposer de connaissances statistiques sur $\Delta1$ et $\Delta2$. Dans le cas ou on considère $\Delta$ comme un vecteur, on peut introduire un grand nombre de paramètres dans le test de rejet, comme d'autre délais de réponse à des messages, la puissance d'émission, la puissance de réception, ... la liste n'est pas exhaustive. Chacun de ces paramètres peut être combinés pour produire $\Delta r$. N'importe quelle grandeur physique mesurable, temps, puissance..., dans le cadre de la mise en oeuvre d'une communication entre un terminal et un réseau est susceptible d'être utilisée dans une mise en oeuvre de l'invention. Une grandeur physique mesurée donne une mesure physique, sous entendu de cette grandeur physique. Par simplification, une mesure physique est aussi simplement appelée une mesure.

**Revendications**

**1.** Procédé sécurisé d'établissement d'une communication ou d'une transaction entre un terminal et un élément de l'infrastructure d'un réseau auquel le terminal envoie une requête de connexion ou de transaction, dans lequel :

- le terminal émet vers l'élément de l'infrastructure réseau des messages selon un protocole de connexion ou de transaction,
- l'élément de l'infrastructure réseau répond à ces messages selon le protocole de connexion ou de transaction, **caractérisé en ce que** :

  - l'élément de l'infrastructure réseau acquiert au cours de ces échanges P mesures physiques sur les messages issus du terminal,
  - l'élément de l'infrastructure réseau effectue un test de rejet statistique sur ces P mesures physiques par rapport à une connaissance préalablement acquise et,
  - dans le cas où le test de rejet conclut que le terminal présente un comportement mesuré non conforme à la connaissance déjà acquise et donc anormal, l'élément de l'infrastructure réseau rejette la demande de connexion ou de transaction,
  - tandis que dans le cas où le test identifie que le terminal a un comportement mesuré conforme à la connaissance déjà acquise, l'élément de l'infrastructure réseau enrichit sa connaissance par la prise en compte de ces nouvelles mesures.

**2.** Procédé selon la revendication 1 **caractérisé en ce que** la connaissance statistique est basée sur une combinaison des paramètres acquis selon des opérateurs mathématiques appartenant au moins au groupe formé de l'addition, la soustraction, la multiplication, la division.

**3.** Procédé selon l'une des revendications 1 ou 2 **caractérisé en ce que** le test de rejet se base et est effectué en fonction d'une des caractéristiques statistiques des fonctions de distribution ou de répartition de l'échantillon de mesures acquis.

**4.** Procédé selon l'une des revendications 1 à 3 **caractérisée en ce que** le test de rejet est basé sur des tests de normalité.

**5.** Procédé selon l'une des revendication 1 à 4 dans lequel un téléphone mobile cherche à se connecter à, ou à effectuer une transaction avec, une infrastructure d'un réseau de télécommunication:

- le téléphone émet vers l'infrastructure un premier message de demande de connexion comportant un identifiant de l'utilisateur du téléphone mobile,

- l'infrastructure répond au premier message par un deuxième message challenge comportant un aléa,

- le téléphone répond au deuxième message par un troisième message comportant l'aléa chiffré avec une clé secrète Ki et selon un algorithme connu de l'infrastructure et du téléphone mobile,

- l'infrastructure répond au troisième message, si son contenu correspond bien à une utilisation de la clé Ki attendue par l'infrastructure, par un quatrième message comportant une désignation d'un algorithme de chiffrement à utiliser pour la suite de la communication entre le téléphone mobile et l'infrastructure, une clé Kc à utiliser avec l'algorithme de chiffrement étant une fonction de l'aléa et de Ki,

- le téléphone répond au quatrième message, ou à un message ultérieur de l'infrastructure, en utilisant la clé Kc et l'algorithme de chiffrement désigné,

**caractérisé en ce que** :

- on acquiert, dans un premier temps, la connaissance d'au moins une statistique comportementale de délais de réponse $\Delta$ d'un grand nombre de téléphones mobiles aux P messages de l'infrastructure, l'infrastructure connaissant cette statistique de délai $\Delta$ mesure et scrute le temps de réponse du téléphone mobile qui envoie ladite requête de connexion et applique un test de rejet sur les temps de réponses relativement à la connaissance de la statistique $\Delta$ qui interrompt alors la communication avec le téléphone mobile si la réponse aux P messages provenant de l'infrastructure ne correspond pas à au moins la statistique $\Delta$ de rejet.

6. Procédé selon la revendication 5 **caractérisé en ce que** la statistique $\Delta$ peut être basée sur une combinaison des paramètres acquis.

7. Procédé selon l'une des revendications 5 ou 6 **caractérisé en ce que** le délai $\Delta$ vaut une seconde et dans le cas d'un délai $\Delta$ multidimensionnel, chacun des $\Delta i$ vaut une seconde

8. Procédé selon l'une des revendications 5 à 7 **caractérisé en ce que** le test de rejet est basé sur des tests de normalité par rapport aux estimateurs de la moyenne et de l'écart type.

9. Procédé selon la revendication 8 **caractérisé en ce que** la moyenne et l'écart type sont calculés sur l'échantillon des N derniers délais de réponse au lième message, N étant compris entre 10 et 10000.

10. Procédé selon l'une des revendications 5 à 9 **caractérisé en ce que** l'ordre de grandeur de N est la centaine.

11. Procédé selon l'une des revendications 5 à 9 **caractérisé en ce que** l'ordre de grandeur de N est le millier.

12. Procédé selon l'une des revendications 5 à 9 **caractérisé en ce que** l'ordre de grandeur de N est la dizaine de milliers.

13. Procédé selon l'une des revendications 5 à 12 **caractérisé en ce qu'**un délai $\Delta$ n'est jamais supérieur à 1 seconde et dans le cas d'un délai $\Delta$ multidimensionnel, chacun des $\Delta i$ n'est jamais supérieur à une seconde.

14. Procédé selon l'une des revendications 8 à 13 **caractérisé en ce que** la moyenne et l'écart type sont calculés à une fréquence prédéterminée.

15. Procédé selon l'une des revendications 5 à 12 **caractérisé en ce qu'**un délai $\Delta$ n'est jamais supérieur à une valeur constante C secondes et dans le cas d'un délai $\Delta$ multidimensionnel, chacun des $\Delta i$ n'est jamais supérieur à Ci secondes.

16. Procédé selon l'une des revendications 5 à 15 **caractérisé en ce que** l'élément de l'infrastructure mesurant le délai $\Delta$ est la station de base à laquelle est connecté le téléphone mobile.

17. Procédé selon l'une des revendications 5 à 16 **caractérisé en ce que** l'élément de l'infrastructure mesurant le délai $\Delta$ est un élément de réseau intervenant dans l'établissement d'un accès ou d'une communication sur le réseau mobile.

18. Procédé selon l'une des revendications 5 à 17 **caractérisé en ce que** l'ensemble des messages échangés entre le mobile et le réseau, quelle que soit la couche de protocole ou le protocole utilisé, peuvent faire l'objet d'une mesure de délai de temps de réponse et de la mise en place d'une statistique de rejet de la communication.

**Fig. 1**

**Fig. 2**